Europäisches Patentamt

European Patent Office

Office européen des brevets

(11) Publication number: **0 455 895 A2**

# EUROPEAN PATENT APPLICATION

(21) Application number: **90202425.6**

(51) Int. Cl.⁵: **C09J 7/02**

(22) Date of filing: **12.09.90**

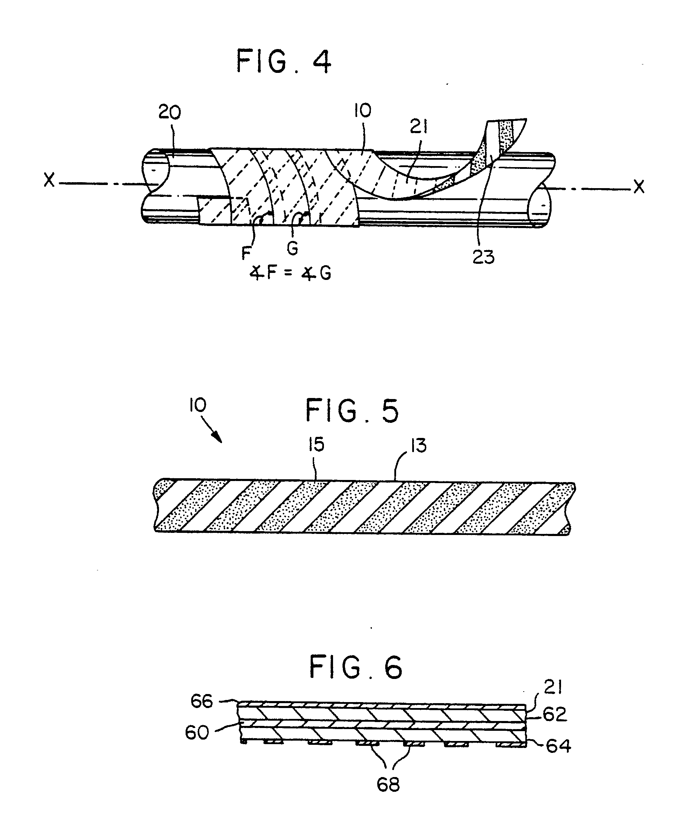

A request for correction of the drawings (fig. 5,6,7) has been filed pursuant to Rule 88 EPC. A decision on the request will be taken during the proceedings before the Examining Division (Guidelines for Examination in the EPO, A-V, 2.2).

(30) Priority: **11.05.90 US 523050**

(43) Date of publication of application:
**13.11.91 Bulletin 91/46**

(84) Designated Contracting States:
**DE FR GB IT SE**

(71) Applicant: **FACILE TECHNOLOGIES**
**185 Sixth Avenue**
**Paterson, N.J. 07509-2477(US)**

(72) Inventor: **Weinstein, Michael H.**
**12 Twin Oaks Road**
**Parsippany, N.J. 07054(US)**
Inventor: **Edenbaum, Martin I.**
**12 Springwood Drive**
**Princeton Jnct., N.J. 08550(US)**

(74) Representative: **de Vries, Johannes Hendrik**
**Fokke et al**
**Octrooibureau Los en Stigter B.V. P.O. Box 20052**
**NL-1000 HB Amsterdam(NL)**

(54) **Modified pressure sensitive tape.**

(57) A tape having pressure sensitive adhesive applied in a specified configuration. Pressure sensitive adhesive is applied to one surface of the tape in parallel stripes situated a specified distance from each other. The adhesive stripes are preferably applied at approximately thirty to sixty degree angles to the sides of the substrate. The tape is stored on a spool with the pressure sensitive adhesive surface being stored face down. The tape releases from the roll at a less than perpendicular angle due to the configuration of the applied adhesive. The tape may then be smoothly and evenly wrapped in a spiral around a cylindrical surface.

FIG. 3

EP 0 455 895 A2

## BACKGROUND OF THE INVENTION

The present invention relates to pressure sensitive tape, and more specifically, to providing a tape having pressure sensitive adhesive applied in a specified geometry.

In many applications, such as when installing or repairing wires or cables, it is necessary to protect or reinforce all or part of a cylindrical surface. For example, after installing electrical harnesses in an automobile, a manufacturer may desire to protect the harnesses so that the insulation on the exterior of the harness does not wear away during contact with other surfaces. It may also be desirable to electrically or thermally insulate a cylindrical surface, such as an electric wire or a hot water pipe, by covering all or part of the surface.

One method of protecting wires from wear and subsequent unwanted electrical contact is to cover the surface to be protected with tape. Covering with tape is also an effective means of thermally insulating a pipe. Tape is a convenient means for covering a cylindrical surface because it is easily applied and easily replaced when a previous layer of tape or covering has worn away. For many applications of tape to a wire or other cylindrical surface, the tape is wrapped around the surface to be covered in a spiral fashion, starting with one end of a length of the cylinder and proceeding gradually to the other end, with each subsequent turn around the cylinder overlapping some but not all of the previous turn. Preferably, tape having pressure sensitive adhesive is used since the adhesive holds the tape in place without the need for other means of securing the tape. The tape is usually stored on a spool or roll which provides ease of storage and removal of the tape for application to a surface to be covered. In known pressure sensitive adhesive tapes, the adhesive is generally applied uniformly across at least one surface of the tape.

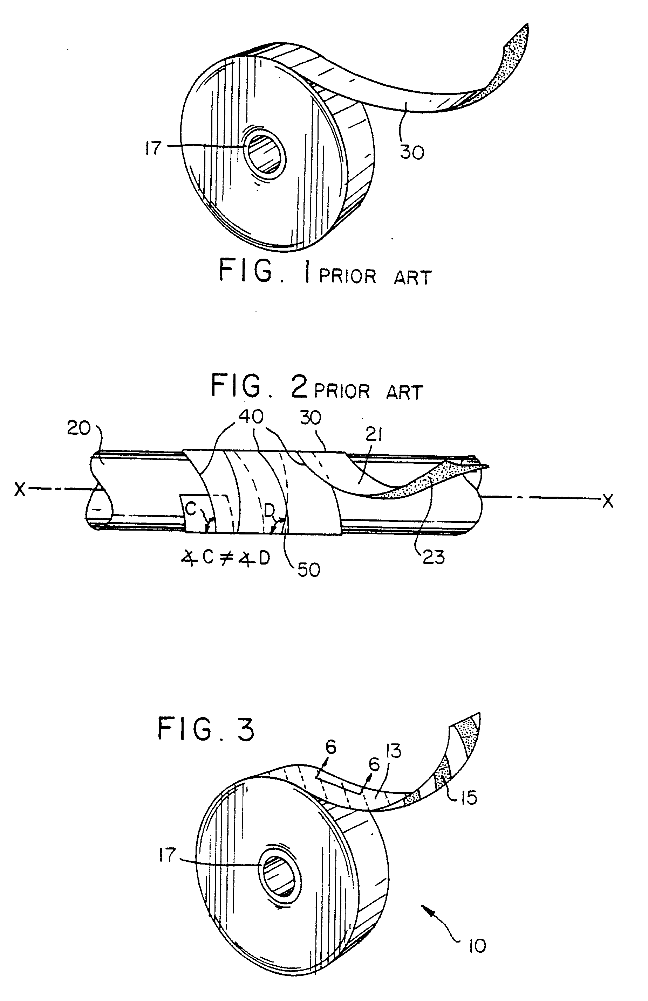

Though it is often easier to apply tape in a spiral around a cylindrical surface than it is to cover such a surface in other ways, difficulties still arise in spiral application since many substrate materials are non-elastic and therefore will not conform to the cylindrical surface. With the pressure sensitive tape of the prior art as seen in FIGS. 1 and 2, adhesive is uniformly applied across at least one surface of a substrate. Usually the tape 30 is wound on a spool 17, for ease in storage and application to a surface. When the conventional tape 30 is pulled from the spool 17 it tends to release from the spool perpendicularly to the axis of the spool. Accordingly, when users attempted to wrap the tape 30 in a spiral around a cylindrical surface 20 the tape 30 releases perpendicularly to the axis X of the cylindrical surface. Therefore, winding a conventional tape 30 in a spiral around the surface 20 forms creases or puckers 40 as the tape 30 is wrapped from one end of the cylinder 20 to the other. As shown in FIG. 2, the results are an imperfect wrap having creases 40 and spaces 50 where adjacent wraps around the cylinder 20 have different angles of application "C" and "D".

Creasing or puckering is not desirable for a number of reasons. First, it interferes with a consistent application of tape to the cylinder, making it difficult to completely cover the surface without going back over previously applied tape. Second, it provides openings for air, water and other foreign matter to contact the cylindrical surface, thereby reducing the tape's effectiveness as a thermal or electrical insulator. Finally, creased or puckered areas get caught on other surfaces and provide contact places where wear can more easily start.

Accordingly, an object of the present invention is to provide a pressure sensitive tape for application to cylindrical surfaces.

Another object of the present invention is to provide a pressure sensitive tape which can be wrapped in a spiral around a cylindrical surface without creasing or puckering.

Still another object of the present invention is to provide a pressure sensitive tape having adhesive applied in a particular configuration such that the tape adheres smoothly and evenly when wrapped around a cylindrical surface.

## SUMMARY OF THE INVENTION

These and other objects of the present invention are met by providing a tape having pressure sensitive adhesive applied in a specified configuration. In a preferred embodiment, the tape substrate may be formed from an aluminum and polyester composite. Pressure sensitive adhesive is applied to the bottom surface of the tape in separated stripes situated parallel to each other. The adhesive stripes are applied at approximately thirty to sixty degree angles to the edges of the substrate. In a preferred embodiment, the chosen angle is forty-five degrees. The tape is stored on a roll with the pressure sensitive adhesive stored face down. With the tape of the present invention, the tape releases from the roll at a less than perpendicular angle due to the configuration of the applied adhesive. The tape may then be smoothly and evenly wrapped in a spiral around a cylindrical surface. In a further embodiment, the top surface of the tape may be uniformly coated with adhesive to provide additional adhesion of each later wrap to a prior wrap.

These and other objects of the present invention are further described in the following description of the preferred embodiments taken together with the drawing, in which like reference numbers refer to like members in the various figures.

## BRIEF DESCRIPTION OF THE DRAWING

FIG. 1 is a front perspective view of pressure sensitive tape of the prior art as the tape releases from its roll.

FIG. 2 is a perspective view of the tape of FIG. 1 as it is applied to a cylindrical surface.

FIG. 3 is a front perspective view of the modified pressure sensitive tape of the present invention as the tape releases from its roll.

FIG. 4 is a perspective view of the tape of FIG. 3 as it is applied to a cylindrical surface.

FIG. 5 is a plan view of a consistent adhesive application for the adhesive stripes of one embodiment of the present invention.

FIG. 6 is a plan view of a dotted adhesive application for the adhesive stripes of another embodiment of the present invention.

FIG. 7 is a plan view of adhesive stripes of alternating widths in a further embodiment of the present invention.

## DESCRIPTION OF THE PREFERRED EMBODIMENTS

At the outset, this invention is described in its broadest overall aspects with a more detailed description following.

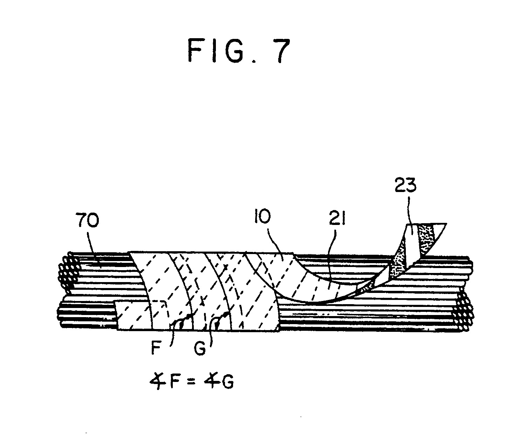

The modified pressure sensitive tape 10 of the present invention as shown in FIGS. 3, 4, 5, 6, and 7 includes the application of adhesive in a specified configuration to one surface of the planar substrate of tape. Tape generally comprises a flexible planar substrate 13 of minimal thickness compared to its length and width where the length is substantially greater than the width. Adhesive, preferably a pressure sensitive adhesive, is applied to the bottom planar surface 23 of the substrate 13. With one embodiment of the present invention as shown in FIG. 5, the adhesive is applied in parallel stripes 15 at acute angles A to the edge of the substrate 13. Application at acute angles aids in the application of the tape 10 to a cylinder 20, which application is shown in FIG. 4 and described in detail below. An angle of thirty to sixty degrees, and preferably forty-five degrees, has been found suitable for many applications, such as for wrapping automobile wire harnesses. The width of the adhesive stripes 15 applied may range from less than to greater than the width of the tape 10, as required for a particular application. In a preferred embodiment, the adhesive stripes 15 are approximately 2/5 of the tape width. In addition, all stripes 15 need not be of the same width. For example, the stripes 15 may of alternating widths as shown in FIG. 7.

Other embodiments of the present invention are possible by altering the adhesive arrangement. For example, adhesive may be applied discontinuously to the substrate 13 in rows of dots 55 as shown in FIG. 6. With such an arrangement, an acute angle A is formed between each row of dots 55 and the edge of the substrate 13. Adhesive may also be applied to the top surface 21 of the substrate 13 to aid subsequent wraps of tape 10 in adhering to the top of prior wraps and to prevent the tape from sliding along the cylinder 20 in the axial direction.

The substrate 13 may be made of any known taping material such as cellophane or masking paper. Preferably the substrate 13 will be flexible and strong yet able to be sheared to a desired length. Users will require substrates 13 of varying strengths and elasticities depending upon the application for which the tape 10 is to be used. In a preferred embodiment, the substrate 13 is formed from an aluminum and polyester composite, a well-known material in the art. Due to its elastic strength and flexibility, the preferred composite substrate 13 is especially well adapted for use in wrapping automobile harness wires to protect and insulate them.

The width and the thickness of the substrate 13 may also be varied within the scope of the present invention. For example, when relatively thin wires or cylindrical surfaces with varied shapes, such as pipe elbows, are to be wrapped, a tape 10 having a lesser width will be desired. When large diameter or continuous surfaces are to be wrapped, a tape 10 having a wider width may be used to maximize coverage per wrap. Users of the present invention should note that the angle A at which the adhesive stripes 15 are placed on the tape 10 becomes more critical as tapes of lesser widths are used, because the overlap caused by successive wraps is then a larger percentage of the tape width. Furthermore, the need for precise wrapping increases when wrapping smaller diameter objects since wrapping is then a more intricate operation.

With the modified pressure sensitive tape 10 of the present invention, the tape 10 stores flat on a spool 17 as is normally done with known tapes, with the bottom surface 23 having adhesive applied to it facing down. When pulled from the roll as shown in FIG. 3, however, the tape 10 releases at the angle A between the adhesive stripe 15 and the edge of the tape 10 due to the configuration of the adhesive on the substrate 13. As such, a user may consistently apply the tape 10 to the cylindrical surface 20, with the angles "F" and "G" between successive wraps of tape 10 being substantially equivalent and no puckering or creasing occurring.

The type of adhesive applied to the substrate 13 depends upon the use to which the tape 10 is to be put. The various types of adhesive presently available are all within the scope of the present invention. A user needing to permanently affix the tape 10 to a cylindrical surface 20 may chose cured acrylic, urethane, or rubber-based pressure sensitive adhesive material, for example. If a user desires less permanent adhesion, such as when repeated access to the area to be taped is anticipated, adhesives such as uncured acrylic, urethane, or rubber-based material may be desired.

Example

For wrapping automobile harnesses of approximately one inch diameter, the following embodiment of a modified pressure sensitive tape of the present invention has been found to yield a smooth continuous application of tape to the wire:
substrate material: aluminum and polyester composite
width of substrate: 1.25 inches
thickness of substrate without adhesive: .010 inches
thickness of substrate with adhesive: .015 inches
type of adhesive: pressure sensitive acrylic
configuration of adhesive:
    continuous 1/2 inch wide stripes,
    applied at 45⁰ angles to the sides of the substrate,
    separated by 1/2 inch along the length of the substrate.
When pulled from the spool 17, this tape releases at an approximately forty-five degree angle to the axis of the spool. Accordingly, when wrapped in a spiral on a cylinder, the tape applies at an approximately forty-five degree angle to the axis of the cylinder. Each subsequent wrap overlaps each prior wrap without puckering, creasing or leaving uncovered spaces.

The embodiments which have been described above are but several of the many which utilize this invention and are set out here by way of illustration but not of limitation. Many other embodiments which will be readily apparent to those skilled in the art may be made without materially departing from the spirit and scope of this invention.

**Claims**

1. A pressure sensitive tape comprising a substrate to which an adhesive is applied in a configuration that will cause the tape to release from the axis of a spool at a non-perpendicular angle.

2. The pressure sensitive tape according to claim 1 wherein the configuration that will cause the tape to release from the axis of the spool at a non-perpendicular angle comprises a plurality of separated stripes of adhesive on a bottom planar face of the substrate at acute angles to the edge of the substrate.

3. A pressure sensitive tape for wrapping in a spiral around and adhering to a cylindrical surface, comprising;
    a flexible planar substrate having a top surface, a bottom surface, and two edges;
    a plurality of pressure sensitive adhesive stripes applied to the bottom surface of the flexible planar substrate parallel to each other and at acute angles to the edges of the flexible planar substrate; and
    a spool for storing the pressure sensitive tape, wherein the flexible substrate is wound around the spool with the bottom surface placed face-down on the spool.

4. The pressure sensitive tape according to claim 3 wherein the flexible planar substrate comprises an aluminum and polyester composite.

5. The pressure sensitive tape according to claim 3 wherein the flexible planar substrate comprises masking paper.

6. The pressure sensitive tape according to claim 3 wherein the flexible planar substrate comprises cellophane.

7. The pressure sensitive tape according to claim 3 wherein the acute angle is approximately forty-five degrees.

8. The pressure sensitive tape according to claim 3 wherein the plurality of pressure sensitive adhesive stripes are of substantially the same width.

9. The pressure sensitive tape according to claim 3 wherein the plurality of pressure sensitive adhesive stripes are of different widths.

10. The pressure sensitive tape according to claim 3 wherein the plurality of pressure sensitive adhesive stripes are of alternating widths.

11. The pressure sensitive tape according to claim 3 wherein the plurality of pressure sensitive adhesive stripes are separated by approximately one half inch.

12. The pressure sensitive tape according to claim 3 wherein the plurality of pressure sensitive adhesive stripes are approximately one half inch wide.

13. The pressure sensitive tape according to claim 3 wherein the flexible planar substrate is of substantially minimal thickness compared to its length and width and wherein the flexible planar substrate is of substantially greater length than width.

14. The pressure sensitive tape according to claim 3 further comprising adhesive applied to the top surface of the flexible planar substrate.

15. The pressure sensitive tape according to claim 3 wherein the plurality of pressure sensitive adhesive stripes comprise uncured acrylic.

16. The pressure sensitive tape according to claim 3 wherein the plurality of pressure sensitive adhesive stripes comprise cured acrylic.

17. The pressure sensitive tape according to claim 3 wherein the plurality of pressure sensitive adhesive stripes comprise uncured urethane.

18. The pressure sensitive tape according to claim 3 wherein the plurality of pressure sensitive adhesive stripes comprise cured urethane.

19. The pressure sensitive tape according to claim 3 wherein the plurality of pressure sensitive adhesive stripes comprise uncured rubber-based adhesive.

20. The pressure sensitive tape according to claim 3 wherein the plurality of pressure sensitive adhesive stripes comprise cured rubber-based adhesive.

21. A pressure sensitive tape for wrapping in a spiral around and adhering to a cylindrical surface, comprising;

a flexible planar substrate made of an aluminum and polyester composite and having a top surface, a bottom surface, and two edges, wherein the flexible planar substrate is of substantially minimal thickness compared to its length and width and wherein the flexible planar substrate is of substantially greater length than width;

a plurality of pressure sensitive adhesive stripes applied to the bottom surface of the flexible planar substrate parallel to each other and at approximately forty-five degree angles to the edges of the flexible planar substrate, wherein the plurality of pressure sensitive adhesive strips are approximately on half inch wide and are separated from each other by approximately one half inch; and

a spool for storing the pressure sensitive tape, wherein the flexible substrate is wound around the spool with the bottom surface placed face-down on the spool.

22. A method for producing a pressure sensitive tape which is adapted for spiral wrapping around and adhering to a cylindrical surface, comprising the steps of:

applying adhesive material in a plurality of separated parallel stripes across the width of a bottom surface of a flexible planar substrate having a top surface, a bottom surface, and two edges.

23. The method according to claim 22, further comprising the step of winding the pressure sensitive tape around a spool wherein the bottom planar face of the pressure sensitive tape is placed face down on the spool.

FIG. 1 PRIOR ART

FIG. 2 PRIOR ART

$\angle C \neq \angle D$

FIG. 3

# FIG. 4

$\angle F = \angle G$

# FIG. 5

# FIG. 6

# FIG. 7

$\angle F = \angle G$